# EUROPÄISCHE PATENTSCHRIFT

(11) **EP 1 363 062 B1**
(45) Veröffentlichungstag und Bekanntmachung des Hinweises auf die Patenterteilung: **06.04.2005**
(21) Anmeldenummer: 03290978.0
(22) Anmeldetag: 18.04.2003
(51) Int. Cl.: F16L 59/06, F16L 59/16, F16L 59/14

(54) **Leitungsrohr für den Transport von tiefgekühlten Medien**
Conduit for the transport of cryogenic fluids
Tuyau de canalisation pour le transport de fluides cryogéniques

(30) Priorität: 15.05.2002 DE 10221534
(43) Veröffentlichungstag der Anmeldung: 19.11.2003
(73) Patentinhaber: Nexans, 75008 Paris (FR)
(72) Erfinder: Schippl, Klaus, 30659 Hannover (DE)
(74) Vertreter: Döring, Roger, Dipl.-Ing.

(56) Entgegenhaltungen:
- EP-A- 0 326 923
- WO-A-01/27514
- DE-A- 3 142 702
- US-A- 4 046 407
- US-B1- 6 257 282
- LAEGER H ET AL: "Long flexible transfer lines for gaseous and liquid helium" CRYOGENICS, IPC SCIENCE AND TECHNOLOGY PRESS LTD. GUILDFORD, GB, Bd. 18, Nr. 12, Dezember 1978 (1978-12), Seiten 659-662, XP002124084 ISSN: 0011-2275

## Beschreibung

Die Erfindung betrifft ein Leitungsrohr nach dem Oberbegriff des Anspruchs 1 sowie ein Verfahren zur Herstellung eines Leitungsrohres nach Anspruch 7.

Aus der EP-A-0 326 923 ist ein Leitungsrohr zum Transport von tiefgekühlten Medien bekannt, welches aus zwei konzentrisch und im Abstand zueinander angeordneten gewellten Metallrohren besteht, wobei in dem Ringspalt zwischen den Metallrohren eine wendelartig gewickelte Superisolierung aus wechselweise übereinander angeordneten Lagen aus Metallfolien oder metallisierten Kunststoffolien und Isoliermaterial z. B. Glasfaservlies sowie ein Vakuum vorgesehen ist. Das Vakuum wird beispielsweise durch Pumpen im Ringspalt erzeugt, wobei der Pumpanschluß am Ende des Leitungsrohres bzw. an beiden Enden des Leitungsrohres angeschlossen wird.

Wegen der dicht gepackten Superisolierung, welche die Rohre in konzentrischer Anordnung halten soll, ist der Pumpvorgang sehr langwierig.

Bei der EP-A-0 326 923 ist deshalb vorgesehen, eine gesonderte Abstandshalterung zwischen dem inneren Rohr und der ersten Lage der Superisolierungswicklung vorzusehen, wodurch der Evakuierungsvorgang erheblich beschleunigt wird. Diese Vorgehensweise macht eine wirtschaftliche Evakuierung von Leitungsrohren bis zu 100 m Länge möglich.

Durch die Entwicklung von neuen supraleitenden Werkstoffen, die schon bei Temperaturen oberhalb von 50 K in den supraleitenden Zustand übergehen, werden supraleitende Kabel wirtschaftlich, da die Kosten für die Kühlung erheblich geringer geworden sind.

Das Leitungsrohr nach der EP-A-0 326 923 eignet sich in hervorragender Weise als sog. "Cryogenic envolope" für supraleitende Kabel, da es eine gute Flexibilität, gute Isolationswirkung und eine einfache kabeltechnische Fertigung in sich vereinigt. Solche supraleitenden Kabel sind nur wirtschaftlich, wenn Längen von mehr als 100 m vorzugsweise je nach Durchmesser bis zu 500 m herstellbar sind. Längen von mehr als 100 m sind jedoch nach dem heutigen Kenntnisstand wirtschaftlich nicht zu evakuieren.

Aus der US 6 257 282 ist eine vorisolierte Rohreinheit zum Transport von tiefgekühlten Medien bekannt, welche aus einem starren metallischen Innenrohr und einem konzentrisch und im Abstand dazu angeordneten starren metallischen Außenrohr besteht. Der Ringspalt jeder Rohreinheit weist eine Isolierung auf und ist evakuiert. Hierzu ist das Außenrohr mit einer Bohrung versehen, in welcher ein Rohrstutzen eingeschweißt sein kann. Eine Vielzahl von derartigen Rohreinheiten wird zu einem Leitungsrohr zusammengesetzt. Die Bohrung bzw. der Rohrstutzen können mit einer Pumpe verbunden werden, welche den Ringspolt auch nach fertiger Verlegung der Rohreinheiten evakuieren kann.

Der Erfindung liegt die Aufgabe zugrunde, das bekannte aus gewellten Metallrohren bestehende Leitungsrohr dahingehend zu verbessern, daß auch bei Längen von mehr als 100 m eine schnelle Evakuierung des Ringspaltes möglich wird.

Diese Aufgabe wird durch das im Kennzeichen des Anspruchs 1 Erfaßte sowie durch die Merkmale des Anspruchs 7 gelöst.

Weitere vorteilhafte Ausgestaltungen der Erfindung sind in den Unteransprüchen erfaßt.

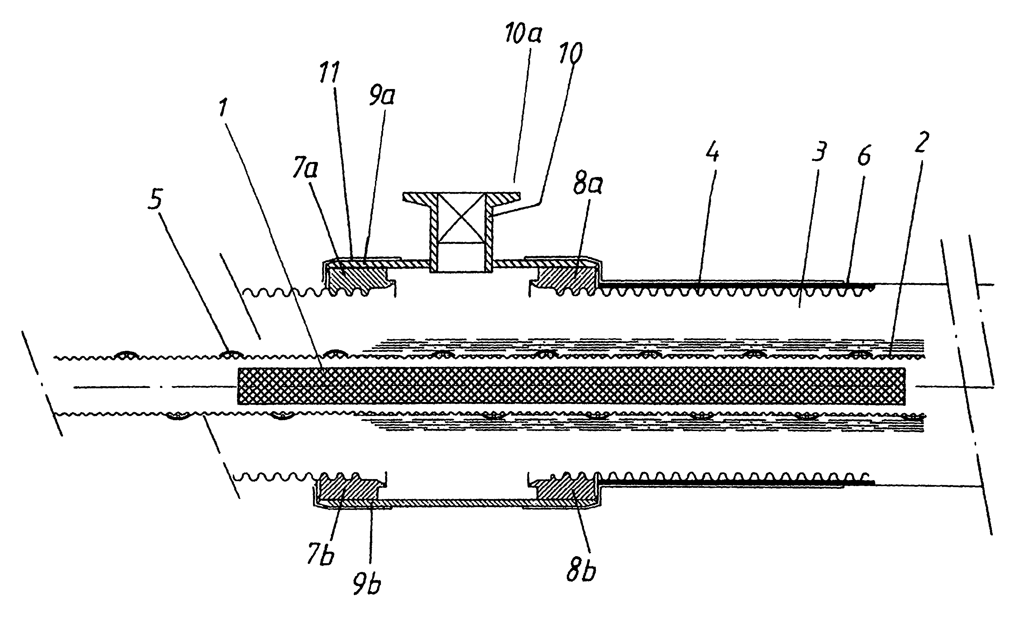

Die Erfindung ist anhand eines in der Figur schematisch dargestellten Ausführungsbeispiels näher erläutert.

Die Figur zeigt einen Schnitt durch eine seitliche Ansicht eines Supraleiterkabels, welches aus dem Supraleiter 1, sowie einem sogenannten "cryogenic envelope" aus einem Innenrohr 2, einer Superisolierung 3 sowie einem Außenrohr 4 besteht. Der Supraleiter 1 besteht vorzugsweise aus einem Mischoxid, welcher in an sich bekannter Weise als Draht aus Fasern in einer Silbermatrix hergestellt ist. Das Innenrohr 2 ist ein längsnahtgeschweißtes gewelltes Rohr aus austenitischem Stahl. Auf das Innenrohr 2 ist ein Abstandshalter 5 in Form einer Schraubenlinie aufgewickelt. Auf dem Innenrohr 2 und dem Abstandshalter 5 ist die Superisolierungsschicht 3 angeordnet, die aus wechselweise aufgebrachten Lagen aus reflektierenden Metallfolien und nicht wärmeleitendem Material z. B. Glasfaservlies besteht. Die dem Innenrohr 2 benachbarte Lage ist eine Metallfolie.

Das Außenrohr 4 ist ebenfalls ein längsnahtgeschweißtes, gewelltes Rohr aus austenitischem Stahl. Das Außenrohr 4 ist von einem Kunststoffmantel 6 umgeben.

Das dargestellte Supraleiterkabel kann auf in der Kabeltechnik üblicher Weise in kontinuierlicher Arbeitsweise in großen Längen hergestellt werden, wobei die maximale Länge durch das Fassungsvermögen der Transportmittel begrenzt ist, z. B. durch die Größe der Kabeltrommel.

Der von einer nicht dargestellten Vorratsspule abgezogene Supraleiter wird in kontinuierlicher Arbeitsweise von einem Band aus austenitischem Stahl umhüllt, welches längsnahtverschweißt, gewellt und auf eine Vorratsspule aufgewickelt wird. In einem nächsten Arbeitsschritt wird auf das von der Vorratsspule abgezogene Metallrohr der Abstandshalter und die Superisolierung aufgewickelt. Dieses Gebilde wird von einem Band aus austenitischem Stahl rohrförmig umgeben und das Metallrohr längsnahtgeschweißt und gewellt. Abschließend wird ein Kunststoffmantel auf das gewellte äußere Rohr aufextrudiert.

Bei dem auf diese Weise hergestellten Supraleiterkabel wird in vorbestimmten Abständen z. B. 100 m, der Kunststoffmantel 6 sowie das Außenrohr 4 entfernt.

Auf die Enden des Außenrohres 4 werden je zwei Halbschalen 7a, 7b und 8a, 8b aufgesetzt und an ihren Trennfugen sowie an ihren einander zugekehrten Stirnseiten mit den Enden des Außenrohres vakuumdicht verschweißt. Die Halbschalen 7a, 7b und 8a, 8b bestehen ebenfalls aus austenitischem Stahl. Wie aus der Figur erkennbar ist weisen die Halbschalen 7a, 7b und 8a, 8b an ihren dem Außenrohr 4 zugekehrten Oberflächen eine der Form der Wellung des Außenrohres 4 angepaßte Profilierung auf, welche die Halbschalen bzw. die aus den Halbschalen 7a, 7b und 8a, 8b geschweißten Ringe formschlüssig mit den Außenrohr 4 verbinden und somit die Schweißnaht entlasten.

Über die aus den Halbschalen 7a, 7b und 8a, 8b gebildeten Ringe werden zwei Halbschalen 9a und 9b, die aus Blechabschnitten aus austenitischen Stahl hergestellt sind, herumgelegt und endseitig mit den Halbschalen 7a, 7b und 8a, 8b sowie an ihrer Trennebene vakuumdicht verschweißt. Die Halbschale 9a weist einen Rohrstutzen 10 mit Flansch 10a auf, an den eine Vakuumpumpe anschließbar ist.

Über die Halbschalen 9a, 9b und den Kunststoffmantel 6 kann noch eine Schutzmanschette 11 herumgelegt werden.

Der zwischen dem Innenrohr 2 und dem Außenrohr 4 befindliche Ringspalt, der teilweise mit der Superisolierungsschicht ausgefüllt ist, ist an beiden Enden einer Kabellänge vakuumdicht nach außen abgeschottet.

Nach Fertigstellung dieser Vorarbeiten werden an die Flansche 10a nicht dargestellte Vakuumpumpen angeschlossen, welche den Ringspalt evakuieren.

Bei einer Kabellänge von ca. 500 m sind im Abstand von jeweils 100 m vier Pumpanschlüsse vorgesehen. Um Restgase, die nach dem Evakuieren in den Ringspalt frei werden, abzufangen, kann in den Ringspalt ein Gettermaterial eingebracht werden,. vorzugsweise bei der Herstellung der Pumpanschlüsse.

## Patentansprüche

1. Leitungsrohr zum Transport von tiefgekühlten Medien insbesondere ein Supraleiterkabel, bestehend aus einem Supraleiter (1) sowie mindestens zwei konzentrisch und im Abstand zueinander angeordneten Metallrohren (2,4), wobei in dem Ringspalt zwischen den Metallrohren (2,4) eine Isolierungsschicht (3) angeordnet ist und der Ringspalt evakuiert ist, **dadurch gekennzeichnet, daß** das äußere der Metallrohre (4) in vorbestimmten Abständen rundum aufgetrennt ist und über jeder Öffnung ein Pumpstutzen (10) vakuumdicht mit dem äußeren Metallrohr (4) verschweißt ist, daß die Pumpstutzen (10) jeweils in längsaxialem Abstand zueinander angeordnete Metallringhälften (7a,7b,8a,8b) aufweisen, welche mit den Enden des rundum geöffneten Metallrohres (4) verschweißt sind, und daß zwei Mantelhälften (9a,9b), in deren Mantelfläche der Pumpstutzen (10) für eine Pumpe vorgesehen ist, die Metallringe (7a,7b,8a,8b) überdecken und mit deren Mantelfläche vakuumdicht verschweißt sind.

2. Leitungsrohr nach Anspruch 1, **dadurch gekennzeichnet, daß** die Metallrohre (2,4) längsnahtgeschweißt und gewellt sind und die Metallringhälften (7a,7b,8a,8b) mit einer der Wellung des äußeren Rohres entsprechenden inneren Profilierung versehen sind.

3. Leitungsrohr nach Anspruch 1 oder 2, **dadurch gekennzeichnet, daß** die Isolierungsschicht (3) aus wechselweise übereinander angeordneten Lagen aus Isoliermaterial und reflektierendem Material besteht.

4. Leitungsrohr nach einem der Ansprüche 1 bis 3, **dadurch gekennzeichnet, daß** die Pumpstutzen (10) aus zwei Halbschalen (9a,9b) bestehen, die an ihrer Trennfuge vakuumdicht miteinander verschweißt sind.

5. Leitungsrohr nach einem der Ansprüche 1 bis 4, **dadurch gekennzeichnet, daß** die Pumpstutzen (10) in Abständen von 50 - 150 m zueinander angeordnet sind.

6. Leitungsrohr nach einem der Ansprüche 1 bis 5, **dadurch gekennzeichnet, daß** im Bereich der Pumpstutzen (10) Gettermaterial in den Innenraum zwischen den Rohren (2,4) eingebracht ist.

7. Verfahren zur Herstellung eines Leitungsrohres zum Transport von tiefgekühlten Medien insbesondere eines Supraleiterkabels (1), bei dem ein Metallband in kontinuierlicher Arbeitsweise zu einem Rohr mit Längsschlitz geformt, der Längsschlitz verschweißt und das geschweißte Rohr gewellt wird, auf das gewellte Rohr (2) eine Isolierschicht (3) durch Wickeln aufgebracht wird, um das mit der Isolierschicht (3) versehene gewellte Metallrohr (2) ein weiteres Metallband in kontinuierlicher Arbeitsweise zum Rohr mit Längsschlitz geformt, der Längsschlitz verschweißt und das geschweißte Rohr gewellt wird, **dadurch gekennzeichnet, daß** in bestimmten Abständen aus dem äußeren Rohr (4) eine Länge herausgetrennt wird, die Öffnung mit Halbschalen (9a,9b) abgedeckt wird, die Halbschalen (9a,9b) mit dem Außenrohr (4) sowie an ihrer Trennfuge vakuumdicht verschweißt werden, zumindest eine Pumpe an ein an den Halbschafen (9a,9b) vorgesehenen Pumpstutzen (10) angeschlossen und der Ringspalt evakuiert wird.

8. Verfahren nach Anspruch 7, **dadurch gekennzeichnet, daß** an jeden Pumpstutzen (10) eine Pumpe angeschlossen wird, und der Ringspalt von allen Pumpen gleichzeitig evakuiert wird.

## Claims

1. Conduit for the transport of cryogenic media, particularly a superconductor cable comprising a superconductor (1) and at least inner and outer metal tubes (2,4) spaced apart from one another, an insulated layer (3) being situated in an annular gap between the metal tubes (2,4), and the annular gap being evacuated **characterized in, that** the exterior of the outer metal tube (4) is separated at predetermined intervals to form openings and above each opening a pump connection (10) is welded vacuum-tight to the outer metal tube, that each pump connection (10) has metal ring halves (7a,7b,8a,8b) separated from one another at a distance along the longitudinal axis, said metal ring halves (7a,7b,8a,8b) being welded to the ends of the metal tube (4) which is open all around and that two casing halves (9a,9b), in the lateral surface of which is provided a pump connection (10) for a pump, cover the metal rings (7a,7b,8a,8b) and are welded vacuum-tight to their lateral surface.

2. Conduit according to claim 1, **characterized in that** the metal tubes (2,4) are longitudinally welded and corrugated and that the metal ring halves (7a,7b,8a,8b) have an internal profiling corresponding to the corrugation of the outer tube (4).

3. Conduit according to claim 1 or 2, **characterized in that** the insulating layer (3) comprises alternating superposed layers of insulation material and reflective material.

4. Conduit according to one of the claims 1 to 3, **characterized in that** the pump connections (10) comprise half-shells (9a,9b) which are welded vacuum-tight to one another at their partition line.

5. Conduit according to one of the claims 1 to 4, **characterized in that** the pump connections (10) are situated at intervals of 50 - 150 m apart.

6. Conduit according to one of the claims 1 to 5, **characterized in that** in the region of the pump connections (10) getter material is introduced into the interior space between the tubes (2,4).

7. Method of producing a conduit for the transport of cryogenic media particularly a superconductor cable (1) wherein a metal tape is continuously formed to a slotted metal tube the slot of the slotted tube is welded and the welded tube is corrugated, onto the corrugated tube (2) an insulating layer (3) is wrapped, around the corrugated tube (2) provided with the insulating layer (3) a further metal tape is formed to a metal tube with a longitudinal slot, the slot is welded and the welded tube is corrugated, **characterized in that** at predetermined intervals a tube length is separated from the outer metal tube (4), the opening is covered with half-shells (9a,9b), the half-shells are vacuum-tight welded to the ends of the metal tube (4) and along their portion line, at least one pump is partition connected to the pump connection (10) at the half-shells (9a,9b) and the annular gap is evacuated.

8. Method according to claim 7, **characterized in that** to each of the pump connections (10) a pump is connected and the annular gap is evacuated simultaneously by all pumps.

## Revendications

1. Tuyau destiné au transport de fluides réfrigérés, en particulier un câble supraconducteur, composé d'un supraconducteur (1) et d'au moins deux tubes métalliques (2,4) disposés concentriquement et à distance l'un de l'autre, dont l'interstice annulaire séparant les tubes métalliques (2,4) est occupé par une couche isolante (3) et mis sous vide, **caractérisé en ce que** le tube métallique externe (4) est disjoint sur tout le pourtour à des distances prédéfinies, et que par chaque ouverture, un raccord de pompage (10) est soudé de façon étanche au vide sur le tube métallique externe (4), que les raccords de pompage (10) présentent des demi-bagues métalliques (7a, 7b, 8a, 8b) disposées axialement à distance les unes des autres, qui sont soudées sur les extrémités du tube métallique ouvert (4) sur tout le pourtour et que deux demi-gaines (9a, 9b), accueillant sur leur surface le raccord de pompage (10) prévu pour une pompe, recouvrent les bagues métalliques (7a, 7b, 8a, 8b), et sont soudées de façon étanche au vide sur la surface de la gaine.

2. Tuyau selon la revendication 1, **caractérisé en ce que** les tubes métalliques (2,4) sont soudés longitudinalement et ondulés et que les demi-bagues métalliques (7a, 7b, 8a, 8b) comportent un profil interne correspondant à l'ondulation du tube extérieur.

3. Tuyau selon la revendication 1 ou 2, **caractérisé en ce que** la couche isolante (2) se compose alternativement de couches superposées de matériau isolant et de matériau réfléchissant.

4. Tuyau selon les revendications 1 à 3, **caractérisé en ce que** les raccords de pompage (10) sont composés de deux demi-coques (9a, 9b) soudées ensemble de façon étanche au vide au niveau de leur jonction.

5. Tuyau selon les revendications 1 à 4, **caractérisé en ce que** les raccords de pompage (10) sont disposés à des distances de 50 à 150 m les uns des autres.

6. Tuyau selon les revendications 1 à 5, **caractérisé en ce que** dans la zone des raccords de pompage (10), un dégazeur est introduit dans l'espace situé entre les tubes (2, 4).

7. Procédé pour la fabrication d'un tuyau destiné au transport de fluides réfrigérés, en particulier d'un câble supraconducteur (1) permettant de transformer en continu un ruban métallique en un tube comportant une fente longitudinale, de souder la fente longitudinale, d'onduler le tube soudé et de disposer une couche isolante (3) par enroulement sur le tube ondulé (2), de transformer en continu un autre ruban métallique en un tube comportant une fente longitudinale autour du tube métallique ondulé (2) doté de la couche isolante (3), de souder la fente longitudinale et d'onduler le tube soudé, **caractérisé en ce qu'à** des intervalles prédéfinis du tube externe (4), une longueur est disjointe, l'ouverture est recouverte par des demi-coques (9a, 9b), les demi-coques (9a, 9b) sont soudées de façon étanche au vide sur le tube externe (4) ainsi qu'au niveau de leur jonction, au moins une pompe est raccordée à l'un des raccords de pompage (10) prévus sur les demi-coques (9a, 9b) et l'interstice annulaire est mis sous vide.

8. Procédé, selon la revendication 7, **caractérisé en ce qu'**une pompe est raccordée à chaque raccord de pompage (10) et que l'interstice annulaire est mis sous vide par toutes les pompes simultanément.
